(19) Europäisches Patentamt

European Patent Office

Office européen des brevets

(11) **EP 1 253 694 A1**

(12) **EUROPÄISCHE PATENTANMELDUNG**

(43) Veröffentlichungstag:
    **30.10.2002 Patentblatt 2002/44**

(51) Int Cl.⁷: **H02J 3/01**

(21) Anmeldenummer: **01111267.9**

(22) Anmeldetag: **16.05.2001**

(84) Benannte Vertragsstaaten:
    **AT BE CH CY DE DK ES FI FR GB GR IE IT LI LU**
    **MC NL PT SE TR**
    Benannte Erstreckungsstaaten:
    **AL LT LV MK RO SI**

(30) Priorität: **24.04.2001 EP 01109439**

(71) Anmelder: **FRAKO Kondensatoren- und**
    **Anlagenbau GmbH**
    **79331 Teningen (DE)**

(72) Erfinder:
    • **De Doncker, R. W.**
      **3000 Leuven (BE)**
    • **Detjen, Dirk**
      **52070 Aachen (DE)**
    • **Mall, Hans-Georg**
      **79336 Herbolzheim (DE)**

(74) Vertreter: **Goddar, Heinz J., Dr.**
    **FORRESTER & BOEHMERT**
    **Pettenkoferstrasse 20-22**
    **80336 München (DE)**

(54) **Schaltungsanordnung zur Reduzierung von Oberschwingungsströmen in einem ein- oder mehrphasigen Versorgungsnetz mit oder ohne Nulleiter**

(57) Schaltungsanordnung zur Reduzierung von Oberschwingungsströmen in einem ein- oder mehrphasigen Versorgungsnetz (10) mit oder ohne Nulleiter, an das mindestens ein elektrischer Verbraucher ($R_L,i_L$) angeschlossen ist, mit einem ein- oder mehrphasigen Versorgungsnetz mit oder ohne Nulleiter, mindestens einem an das Versorgungsnetz angeschlossenen elektrischen Verbraucher, einer zu dem elektrischen Verbraucher parallelen Kapazität ($C_{comp}$), einem ein- oder mehrphasigen Übertrager (12) mit einer Primär- (12a) und einer Sekundärseite (12b), der in Serie zu der Kapazität angeschlossen ist und eine Hauptinduktivität ($L_H$, fig 3) aufweist, die derart gewählt ist, daß sich zusammen mit der Kapazität ein passiver Saugkreis für mindestens eine zu reduzierende Oberschwingung ergibt, einem stromgeregelten ein- oder mehrphasigen Umrichter (14), der zur Speisung des Übertragers parallel zu dessen Primärseite angeschlossen ist, einer Meßeinrichtung zur Messung einer/von Meßgröße(n), an der/denen eine Resonanzerhöhung durch den aus der Gesamtinduktivität und der Kapazität gebildeten Resonanzkreis erkennbar ist, und einer Generiereinrichtung (18), die zur Generierung des/der Stromsollwertes/Stromsollwerte ($i_{AF}$) für den Umrichter auf der Grundlage der von der Meßeinrichtung gemessenen Meßgröße(n) eine Regeleinrichtung umfaßt.

Fig. 1

**Beschreibung**

Die vorliegende Erfindung betrifft eine Schaltungsanordnung zur Reduzierung von Oberschwingungsströmen in einem ein- oder mehrphasigen Versorgungsnetz mit oder ohne Nullleiter.

In Industrieversorgungsnetzen werden häufig zur Kompensation induktiver Blindleistung Blindleistungskompensationsanlagen eingesetzt. Dazu werden parallel zur Last (Verbraucher) Kapazitätsbänke geschaltet. Die Kapazität der Blindleistungskompensationsanlage bildet zusammen mit der Versorgungsnetzinduktivität einen Resonanzkreis (LC-Kreis). Treten in derartigen Versorgungsnetzen mit hoher installierter Blindleistungskompensationsleistung Oberschwingungsströme im Bereich der Resonanzfrequenz des Resonanzkreises auf, so können diese durch den Resonanzkreis unzulässig verstärkt werden.

Ebenso können Oberschwingungsanteile der Versorgungsnetzspannung den Resonanzkreis anregen. In der Praxis werden daher häufig in Serie zu den Kapazitäten der Blindleistungskompensationsanlage Drosseln geschaltet. Durch diese Maßnahme wird die Resonanzfrequenz des resultierenden Kreises in einen Bereich verschoben, in dem keine Anregung zu erwarten ist. Die Verdrosselung der Blindleistungskompensationsanlagen ist jedoch mit einem erheblichen Aufwand verbunden, da jede Kapazitätsstufe der Blindleistungskompensationsanlage einzeln verdrosselt werden muß. Bei einer Veränderung der Netztopologie besteht weiterhin die Gefahr, daß die verdrosselte Blindleistungskompensationsanlage mit der Netzinduktivität in Resonanz tritt.

Der Erfindung liegt somit die Aufgabe zugrunde, eine Schaltungsanordnung bereitzustellen, mit der Oberschwingungsströme auf kostengünstige Weise in einem ein- oder mehrphasigen Versorgungsnetz mit oder ohne Nullleiter, an das mindestens ein elektrischer Verbraucher angeschlossen ist, reduziert werden.

Erfindungsgemäß wird diese Aufgabe gelöst durch eine Schaltungsanordnung zur Reduzierung von Oberschwingungsströmen in einem ein- oder mehrphasigen Versorgungsnetz mit oder ohne Nulleiter, an das mindestens ein elektrischer Verbraucher angeschlossen ist, mit einem ein- oder mehrphasigen Versorgungsnetz mit oder ohne Nulleiter, mindestens einem an das Versorgungsnetz angeschlossenen elektrischen Verbraucher, einer zu dem elektrischen Verbraucher parallelen Kapazität, einem ein- oder mehrphasigen Übertrager mit einer Primärund einer Sekundärseite, der in Serie zu der Kapazität angeschlossen ist und eine Hauptinduktivität aufweist, die derart gewählt ist, daß sich zusammen mit der Kapazität ein passiver Saugkreis für mindestens eine zu reduzierende Oberschwingung ergibt, einem stromgeregelten ein- oder mehrphasigen Umrichter, der zur Speisung des Übertragers parallel zu dessen Primärseite angeschlossen ist, einer Meßeinrichtung zur Messung einer/von Meßgröße(n), an der/denen eine Resonanzerhöhung durch den aus der Gesamtinduktivität und der mit der Kapazität gebildeten Resonanzkreis erkennbar ist und einer Generiereinrichtung, die zur Generierung des/der Stromsollwertes/Stromsollwerte für den Umrichter auf der Grundlage der von der Meßeinrichtung gemessenen Meßgröße(n) eine Regeleinrichtung umfaßt.

Gemäß einer besonderen Ausführungsform der Erfindung kann vorgesehen sein, daß die Meßgröße(n) der/die versorgungsnetzseitige(n) Strom/Ströme ist/sind. Es kann auch die Netzspannung oder z.B. der Strom in der Kapazität als Meßgröße dienen, da es letztendlich nur darauf ankommt, daß durch die Meßgröße eine Resonanzerhöhung erkennbar ist.

Vorteilhafterweise umfaßt die Generiereinrichtung eine Berechnungseinrichtung zum Berechnen des um den Anteil der Fundamentalfrequenz des Versorgungsnetzes reduzierten Stromes bzw. Stromvektors des Versorgungsnetzstromes. Diese kann beispielsweise aus einem Filter höherer Ordnung oder einem digitalen Filter bestehen.

Weiterhin ist bei einer vorteilhaften Ausführungsform der Erfindung vorgesehen, daß die Regeleinrichtung einen Proportionalregler zur Verstärkung des berechneten, um den Anteil der Fundamentalfrequenz des Versorgungsnetzes reduzierten Stromes/Stromvektors mit einer vorgebbaren Übertragungsfunktion $G_{AF}$ umfaßt.

Dabei kann eine Einrichtung zur Durchführung einer A/D-Wandlung des/der gemessenen versorgungsnetzseitigen Stromes/Ströme und nachfolgenden Speicherung des/der digitalisierten Strommeßwertes/Strommeßwerte vorgesehen sein.

Günstigerweise umfaßt die Berechnungseinrichtung eine Konvertiereinrichtung zum Konvertieren des/der Strommeßwertes/Strommeßwerte und eine Filtereinrichtung zum Herausfiltern der Fundamentalfrequenz des Versorgungsnetzes aus dem/den Strommeßwert(en).

Günstigerweise umfaßt die Generiereinrichtung eine Konvertiereinrichtung zum Konvertieren und eine Einrichtung zur D/A-Wandlung des/der von dem Regler ausgegebenen Stromsollwertes/Stromsollwerte.

Außerdem kann vorgesehen sein, daß der Übertrager einen Eisenkern mit einem Luftspalt aufweist. Dadurch wird erreicht, daß die Hauptinduktivität des Übertragers sehr niedrig ist. Auf diese Weise wird ermöglicht, daß der durch die Sekundärseite des Übertragers fließende Grundschwingungsanteil des Stroms nicht durch den primärseitig angeschlossenen Umrichter fließt und die Versorgungsnetzspannung im wesentlichen an der Kapazität abfällt.

Gemäß einer weiteren besonderen Ausführungsform der Erfindung wird die Kapazität von einer Blindleistungkompensationsanlage erzeugt.

Schließlich kann vorgesehen sein, daß die Blindleistungsanlage mindestens eine Kondensatorstufe aufweist.

Der Erfindung liegt die überraschende Erkenntnis zugrunde, daß durch die Verwendung eines Übertragers und eines Umrichters sowie deren Anordnung zueinander und Anordnung innerhalb einer Versorgungsnetzes, an dem mindestens ein elektrischer Verbraucher angeschlossen ist, ein hybrides aktives Filter geschaffen wird, mit dem der Resonanzkreis gedämpft und zusätzlich in hohem Maße Oberschwingungsströme kom-pensiert werden können, wodurch z. B. eine Verdrosselung einer Blindleistungskompen-sationsanlage zur Resonanzunterdrückung ersetzt wird. Durch geeignete Wahl der Hauptinduktivität des Übertragers ergibt sich zusammen mit der Kapazität ein passiver Saugkreis für mindestens eine zu reduzierende Oberschwingung. Ferner wird durch den aktiven Teil, der sich im wesentlichen aus einer Kombination des Übertragers, des Umrichters und der Regeleinrichtung ergibt, im wesentlichen die aus der Kapazität, der Induktivität des Versorgungsnetzes und der Hauptinduktivität des Übertragers resultierende Resonanzfrequenz in einen Bereich verschoben, in dem keine Anregungen zu erwarten sind. Darüber hinaus werden durch den aktiven Teil harmonische Oberschwingungsströme aktiv kompensiert, auf die der passive Saugkreis nicht abgestimmt ist. Die Eigenschaften des hybriden aktiven Filters lassen sich wie folgt zusammenfassen:

- Durch das hybride aktive Filter werden Resonanzüberhöhungen verhindert. Es kann daher auf die aufwendige Verdrosselung jeder einzelnen Kapazitätsstufe verzichtet werden.

- Das hybride aktive Filter wirkt ferner als Oberschwingungsfilter.

- Durch die hybride Gestaltung wird weit weniger Scheinleistung für den Leistungsteil des Filters benötigt, als dies bei herkömmlichen reinen aktiven Filteranordnungen der Fall ist. Dies kann wie folgt begründet werden:

  - Aus der Hauptinduktivität des Übertragers und der Kapazität eines Kondensators oder einer Blindleistungskomensationsanlage kann ein passiver Saugkreis gebildet werden, mit dem ein Großteil der Oberschwingungsströme kompensiert wird.

  - Der Umrichter befindet sich in der beschriebenen Anordnung parallel zur Hauptinduktivität des Übertragers, die in Serie zur Kapazität geschaltet ist. Da die Hauptinduktivität des Übertragers vergleichsweise klein ist, fällt die Versorgungsnetzspannung in erster Linie an der Kapazität eines Kondensators oder einer Blindleistungskompensationsanlage ab. Die Spannungsbelastung des Umrichters ist daher weit geringer als im Falle eines rein aktiven Filters in Shunttopologie. Die zur Kompensation erforderliche Zwischenkreisspannung kann dadurch erheblich reduziert werden.

  - Durch die niedrige Hauptinduktivität des Übertragers wird erreicht, daß der sekundärseitig fließende Grundschwingungsstrom nicht durch den Umrichter fließt. Somit ist die Strombelastung der Umrichters weit geringer als im Falle eines rein aktiven Filters in Serientopologie.

- Durch den Einsatz des Übertragers läßt sich der Strom oder die Spannung des Umrichters reduzieren. Strom und Spannungsbelastung lassen sich durch das Übersetzungsverhältnis des Übertragers einstellen.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:

Fig. 1 ein einphasiges Ersatzschaltbild einer besonderen Ausführungsform der erfindungsgemäßen Schaltungsanordnung;

Fig. 2 ein Blockdiagramm zur Darstellung der Berechnung der Stromsollwerte für den Umrichter der in Fig. 1 gezeigten Schaltungsanordnung;

Fig. 3 noch einmal das in Fig. 1 gezeigte, einphasige Ersatzschaltbild, wobei jedoch der Übertrager vereinfacht durch eine ideale Stromquelle und der Verbraucher ebenfalls vereinfacht durch eine ideale Stromquelle ersetzt worden ist; und

Fig. 4 eine Graphik der Frequenzgänge des Gesamtsystems ohne Filterung, nur mit passiver Filterung und mit aktiver und passiver Filterung.

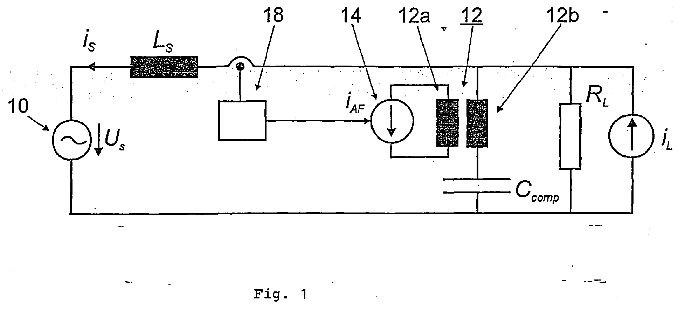

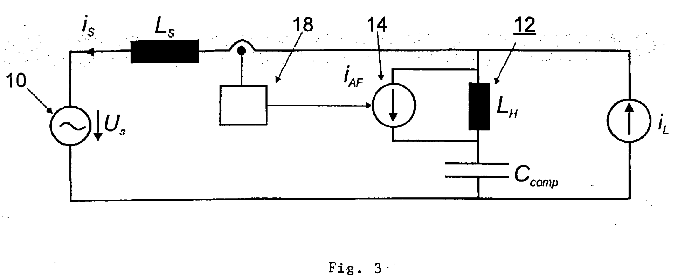

Fig. 1 zeigt ein einphasiges Ersatzschaltbild einer besonderen Ausführungsform der erfindungsgemäßen Schaltungsanordnung. Zur Blindleistungskompensation ist ein Kondensator $C_{comp}$ parallel zu einem Verbraucher ($R_L$; $i_L$) an einem nur einphasig dargestellten Versorgungsnetz 10 angeschlossen. In Serie zur Kapazität $C_{comp}$ der Blindleistungskompensationsanlage ist ein ebenfalls nur einphasig dargestellter Übertrager 12 in der Weise angeschlossen, daß seine Sekundärseite 12b in Serie zur Kapazität $C_{comp}$ angeschlossen ist und seine Primärseite 12a mit einem Umrichter 14, der hier vereinfacht als eine Stromquelle dargestellt ist, parallelgeschaltet ist. Der Übertrager 12 weist zwei auf einem Eisenkern (nicht gezeigt) gekoppelte Wicklungen auf. Z.B. durch einen Luftspalt wird erreicht, daß die Hauptinduktivität $L_H$ (siehe Fig. 3) des Übertragers 12 sehr niedrig ist. $L_H$ wird dabei so gewählt, daß sie zusammen mit $C_{comp}$ einen Saugkreis für mindestens eine zu kompensierende Oberschwingung aufweist. Auf diese Weise wird zusätzlich erreicht, daß der durch die Sekundärseite 12b fließende 50 Hz-Versorgungsstrom nicht durch den auf der Primärseite 12a angeschlossenen Umrichter 14 fließt und somit die Versorgungsnetzspannung im wesentlichen an dem Kondensator $C_{comp}$ der Blindleistungskompensationsanlage abfällt. Weiterhin weist die Schaltungsanordnung eine Meßeinrichtung zur Messung der versorgungsnetzseitigen Ströme und eine Generiereinrichtung auf, die in dem mit den Bezugszeichen 18 gekennzeichneten Kästchen zusammengefaßt sind, wobei letztgenannte Generierungseinrichtung zur Generierung der Stromsollwerte (die hier allgemein mit $i_{AF}$ gekennzeichnet sind) für den Umrichter 14 auf der Grundlage der gemessenen versorgungsnetzseitigen Ströme eine Regeleinrichtung (nicht extra gekennzeichnet) umfaßt.

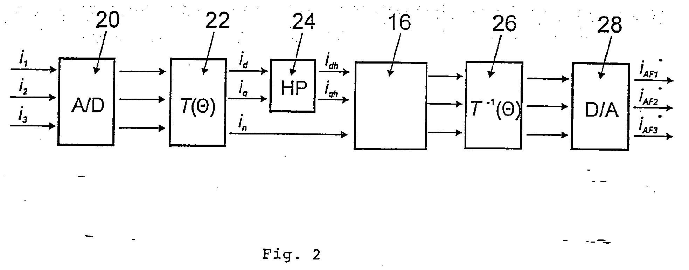

Fig. 2 zeigt die Berechnung der Stromsollwerte $i_{AF1}$, $i_{AF2}$ und $i_{AF3}$ für den Umrichter 14. Zunächst werden mittels der Meßeinrichtung zur Messung der versorgungsnetzseitigen Ströme (nicht gezeigt) die drei versorgungsseitigen Phasenströme $i_1$, $i_2$, und $i_3$ gemessen und nachfolgend mittels einer Einrichtung 20 zur Durchführung einer A/D-Wandlung der gemessenen versorgungsnetzseitigen Ströme und nachfolgenden Speicherung der digitalisierten Strommeßwerte digitalisiert und gespeichert. Nachfolgend werden die gespeicherten Strommeßwerte mittels einer Konvertiereinrichtung 22 zum Konvertieren der Strommeßwerte (nicht gezeigt) einer sogenannten dqn-Transformation $T(\theta)$ unterzogen. Einzelheiten der dqn-Transformation sind in dem US-Patent 5,648,894 beschrieben, deren Inhalt hierin durch Bezugnahme aufgenommen wird. An dieser Stelle soll daher die Transformation nur kurz erläutert werden. Die drei digitalisierten, gespeicherten Phasenströme $i_1$, $i_2$, $i_3$ werden durch Multiplikation mit der Matrix

$$T(\Theta) = \frac{2}{3} \begin{pmatrix} \cos\Theta & \cos\left(\Theta - \dfrac{2\pi}{3}\right) & \cos\left(\Theta + \dfrac{2\pi}{3}\right) \\ -\sin\Theta & -\sin\left(\Theta - \dfrac{2\pi}{3}\right) & -\sin\left(\Theta + \dfrac{2\pi}{3}\right) \\ \dfrac{1}{2} & \dfrac{1}{2} & \dfrac{1}{2} \end{pmatrix}$$

in ein mit der Versorgungsnetzfrequenz rotierendes Koordinatensystem transformiert. Hierzu kann mit Hilfe einer PLL der aktuelle Phasenwinkel $\theta$ einer der drei Phasenspannungen zur Phasensynchronisation des Bezugssystems herangezogen werden. Die Gleichanteile der Größen $i_d$ und $i_q$ (siehe Fig. 2) repräsentieren die Fundamentalfrequenzkomponente des Wirk- und Blindleistungsanteils der Lastströme im ein- oder mehrphasigen Versorgungsnetz. $i_n$ bezeichnet die Nullsystemkomponente der drei Phasenströme (siehe Fig. 2). Durch eine Filtereinrichtung 24 zum Herausfiltern der Fundamentalfrequenz des Versorgungsnetzes in Form eines Hochpasses wird eine Hochpassfilterung vorgenommen, wodurch ein um den Anteil der Fundamentalfrequenz des Versorgungsnetzes reduzierter Stromvektor ($i_{dh}$, $i_{qh}$, $i_n$) im dqn-System erzeugt wird. Dieser Stromvektor wird an die Regeleinrichtung 16 in Form eines Proportionalreglers gegeben. In der Regeleinrichtung 16 wird eine Verstärkung des Stromvektors vorgenommen. Der verstärkte Stromvektor wird anschließend mittels einer Konvertiereinrichtung 26 in das stationäre Bezugssystem mit der inversen Transformation $T^{-1}(\theta)$ zurücktransformiert und mittels einer Einrichtung 28 zur D/A-Wandlung in einen analogen Stromsollwertvektor umgewandelt. Auf diese Weise ergibt sich für den Vektor der Stromsollwerte

$$\overline{\overline{i}}_{AF}^{*} = \begin{pmatrix} i_{AF1}^{*} \\ i_{AF2}^{*} \\ i_{AF3}^{*} \end{pmatrix}$$

für den Umrichter 14.

Zur Bestimmung einer geeigneten Regeleinrichtung wird die Übertragungsfunktion oberschwingungsbehafteter Verbraucherströme auf die Versorgungsnetzseite betrachtet, wobei der Verbraucher vereinfachend als ideale Stromquelle angesehen wird. In Fig. 3 ist hierzu der Übertrager durch ein Ersatzschaltbild ($L_H$) ersetzt worden. Streuinduktivitäten und Zuleitungswiderstände sind hierbei vernachlässigt. Berechnet man die Übertragungsfunktion H(s) der Oberschwingungsanteile des Versorgungsnetzstromes zu denen des Verbraucherstromes, erhält man für die dargestellte Schaltungsanordnung

$$H(s) = \frac{I_{Sh}}{I_{Lh}} = \frac{I + s^2\, L_H C_{Comp}}{I + s^2(L_S C_{Comp} + L_H C_{Comp}\,(I+G_{AF}))}$$

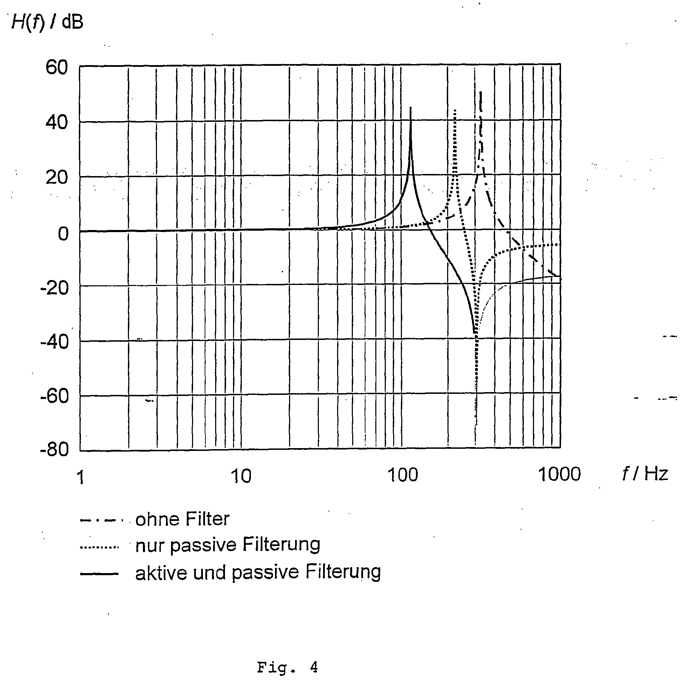

Mit $G_{AF}$ wird hierbei die Übertragungsfunktion der Regeleinrichtung 16 bezeichnet. Bei einer Kompensationsleistung von 350 kVar kann durch Verwendung eines Übertragers mit einer Hauptinduktivität von $L_H$ = 40 μH ein Saugkreis mit der Resonanzfrequenz $f_{RES}$ = 301 Hz aufgebaut werden. Dadurch wird ein Großteil der fünften und siebten Oberschwingungen bereits passiv gefiltert. Durch Wahl einer Regeleinrichtung in Form eines Proportionalreglers mit $G_{AF} = K_p$ kann die Resonanzfrequenz des gesamten Systems ähnlich wie bei der klassischen Verdrosselung in einen unkritischen Bereich verschoben werden. Dieses Verhalten soll durch die in Fig. 4 dargestellten Frequenzgänge des Gesamtsystems erläutert werden.

Die in Fig. 4 dargestellte Kurve mit ganz rechts befindlicher Polstelle zeigt den Amplitudengang der Übertragungsfunktion

$$H_0\,(s) = \frac{I_{Sh}\,(s)}{I_{Lh}\,(s)} \text{ ohne aktive und passive Filtereinrichtung im logarithmischen}$$

Maßstab. Hierbei wurde eine Versorgungsnetzinduktivität von 35 μH und eine Kompensationsleistung des Kondensators von 350 kVar vorausgesetzt. Die daraus resultierende Resonanzfrequenz von 322 Hz ist in der Figur deutlich als Polstelle des Amplitudenganges zu erkennen. Wird nun ein Übertrager mit der Hauptinduktivität von 40 μH in Serie zur Blindleistungskompensationsanlage geschaltet, erhält man den in Fig. 4 gezeigten Kurvenverlauf mit mittig angeordneter Polstelle. Durch die Erhöhung der Gesamtinduktivität des Resonanzkreises verschiebt sich die Polstelle der Übertragungsfunktion leicht zu niedrigeren Oberschwingungsfrequenzen hin. Weiterhin entsteht durch den aus der Hauptinduktivität des Übertragers und der Kapazität der Blindleistungskompensationsanlage gebildeten Saugkreis eine Nullstelle der Übertragungsfunktion bei 301 Hz. Pol- und Nullstelle der Übertragungsfunktion liegen jedoch bei rein passiver Filterung sehr nahe beieinander. Die Kurve mit der links befindlichen Polstelle zeigt den Amplitudengang, wenn zusätzlich der aktive Teil der Filters mit einer Verstärkung des Proportionalreglers von $K_p$ = 5 eingesetzt wird. Die Polstelle der Übertragungsfunktion wird in einen Bereich unterhalb der dritten harmonischen Oberschwingung verschoben. Die durch den passiven Saugkreis verursachte Nullstelle bleibt hingegen unverändert.

Zur Bestimmung eines geeigneten Reglers wurde im vorangehenden Beispiel die Übertragungsfunktion H(s) harmonischer Lastströme auf die Versorgungsnetzseite betrachtet. Die Übertragungsfunktion des Reglers $G_{AF}$ bestimmt das Verhältnis des vom aktiven Filter zu injizierenden Kompensationsstromes zum Oberschwingungsanteil der Meßgröße. Werden wie im obigen Ausführungsbeispiel als Meßgrößen die versorgungsnetzseitigen Ströme gewählt, so erkennt man anhand der entsprechenden Übertragungsfunktion H(s), daß sich mit Hilfe eines Proportionalreglers die Polstelle dieser Funktion zu niedrigeren Frequenzen verschieben läßt. Die Übertragungsfunktion eines Proportionalreglers läßt sich allgemein durch $G_{AF} = K_p$ angeben, wobei $K_p$ den Verstärkungsfaktor des Proportionalreglers darstellt.

Es ist zu beachten, daß die Wahl des Reglertyps von der verwendeten Meßgröße abhängt. Es ist durchaus denkbar, anstatt des versorgungsnetzseitigen Stromes eine andere mit dem Resonanzkreis verknüpfte Meßgröße zu verwenden. Entsprechend ändert sich dann auch die Übertragungsfunktion H(s) und somit auch die Reglerfunktion $G_{AF}(s)$, mit der sich das gewünschte Systemverhalten erzwingen läßt.

Bei einem einphasigen Versorgungsnetz muß zur Berechnung des Oberschwingungsanteils der Meßgröße ein anderer Algorithmus, z. B. die schnelle Fourier-Transformation, als im beschriebenen Fall des Vorliegens eines dreiphasigen Versorgungsnetzes eingesetzt werden.

Die in der vorstehenden Beschreibung sowie in den Ansprüchen und den beiliegenden Zeichnungen offenbarten Merkmalen der Erfindung können sowohl einzeln als auch in beliebiger Kombination für die Verwirklichung der Erfindung in ihren verschiedenen Ausführungsformen wesentlich sein.

Bezugszeichenliste

| 10 | Versorgungsnetz |
|---|---|
| 12 | Übertrager |
| 12a | Primärseite von 12 |
| 12b | Sekundärseite von 12 |
| 14 | Umrichter |
| 16 | Regeleinrichtung |
| 18 | Einrichtungen |
| 20 | Einrichtung zur Durchführung einer A/D-Wandlung |
| 22 | Konvertiereinrichtung |
| 24 | Filtereinrichtung |
| 26 | Konvertiereinrichtung |
| 28 | Einrichtung zur Durchführung einer D/A-Wandlung |
| $C_{comp}$ | Kapazität der Blindleistungskompensationsanlage |
| $G_{AF}$ | Übertragungsfunktion der Verstärkereinrichtung |
| $i_{AF}$ | Sollstrom |
| $i_L$ | Verbraucherstrom |
| $i_s$ | versorgungsnetzseitiger Strom |
| $K_p$ | Verstärkungsfaktor des Proportionalreglers |
| $L_H$ | Hauptinduktivität des Übertragers |
| $L_s$ | Induktivität des Versorgungsnetzes |
| $R_L$ | ohmscher Widerstand des elektrischen Verbrauchers |
| $U_s$ | Versorgungsnetzspannung |

**Patentansprüche**

1.  Schaltungsanordnung zur Reduzierung von Oberschwingungsströmen in einem ein- oder mehrphasigen Versorgungsnetz mit oder ohne Nulleiter, an das mindestens ein elektrischer Verbraucher angeschlossen ist, mit

    -   einem ein- oder mehrphasigen Versorgungsnetz (10) mit oder ohne Nulleiter,

    -   mindestens einem an das Versorgungsnetz angeschlossenen elektrischen Verbraucher,

- einer zu dem elektrischen Verbraucher parallelen Kapazität,

- einem ein- oder mehrphasigen Übertrager (12) mit einer Primär- (12a) und einer Sekundärseite (12b), der in Serie zu der Kapazität angeschlossen ist und eine Hauptinduktivität aufweist, die derart gewählt ist, daß sich zusammen mit der Kapazität ein passiver Saugkreis für mindestens eine zu reduzierende Oberschwingung ergibt,

- einem stromgeregelten ein- oder mehrphasigen Umrichter (14), der zur Speisung des Übertragers parallel zu dessen Primärseite angeschlossen ist,

- einer Meßeinrichtung zur Messung einer/von Meßgröße(n), an der/denen eine Resonanzerhöhung durch den aus der Gesamtinduktivität und der Kapazität gebildeten Resonanzkreis erkennbar ist, und

- einer Generiereinrichtung, die zur Generierung des/der Stromsollwertes/Stromsollwerte für den Umrichter auf der Grundlage der von der Meßeinrichtung gemessenen Meßgröße(n) eine Regeleinrichtung (16) umfaßt.

2. Schaltungsanordnung nach Anspruch 1, **dadurch gekennzeichnet, daß** die Meßgröße(n) der/die versorgungsnetzseitige(n) Strom/Ströme ist/sind.

3. Schaltungsanordnung nach einem der Anspruch 1 oder 2, **dadurch gekennzeichnet, daß** die Generiereinrichtung eine Berechnungseinrichtung zum Berechnen des um den Anteil der Fundamentalfrequenz des Versorgungsnetzes reduzierten Stromes bzw. Stromvektors des Versorgungsnetzstromes umfaßt.

4. Schaltungsanordnung nach Anspruch 3, **dadurch gekennzeichnet, daß** die Regeleinrichtung (16) einen Regler zur Verstärkung des berechneten, um den Anteil der Fundamentalfrequenz der Versorgungsnetzes reduzierten Stromes/Stromvektors mit einer vorgebbaren Übertragungsfunktion $G_{AF}$ umfaßt.

5. Schaltungsanordnung nach einem der vorangehenden Ansprüche, **gekennzeichnet durch** eine Einrichtung (20) zur Durchführung einer A/D-Wandlung des/der gemessenen versorgungsnetzseitigen Stromes/Ströme und nachfolgenden Speicherung des/der digitalisierten Strommeßwertes/Strommeßwerte.

6. Schaltungsanordnung nach Anspruch 5, **dadurch gekennzeichnet, daß** die Berechnungseinrichtung eine Konvertiereinrichtung (22) zum Konvertieren des/der Strommeßwertes/Strommeßwerte und eine Filtereinrichtung (24) zum Herausfiltern der Fundamentalfrequenz des Versorgungsnetzes aus dem/den Strommeßwert(en) umfaßt.

7. Schaltungsanordnung nach Anspruch 6, **dadurch gekennzeichnet, daß** die Generiereinrichtung eine Konvertiereinrichtung (26) zum Konvertieren und eine Einrichtung (28) zur D/A-Wandlung des/der von dem Regler ausgegebenen Stromsollwertes/Stromsollwerte umfaßt.

8. Schaltungsanordnung nach einem der vorangehenden Ansprüche, **dadurch gekennzeichnet, daß** der Übertrager einen Eisenkern (12) mit einem Luftspalt aufweist.

9. Schaltungsanordnung nach einem der vorangehenden Ansprüche, **dadurch gekennzeichnet, daß** die Kapazität von einer Blindleistungskompensationsanlage erzeugt wird.

10. Schaltungsanordnung nach Anspruch 9, **dadurch gekennzeichnet, daß** die Blindleistungskompensationsanlage mindestens eine Kondensatorstufe aufweist.

Fig. 1

Fig. 2

Fig. 3

Fig. 4

**Europäisches Patentamt**

## EUROPÄISCHER RECHERCHENBERICHT

Nummer der Anmeldung

EP 01 11 1267

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 567 994 A (HUANG SHIPING ET AL) 22. Oktober 1996 (1996-10-22) | 1-5,8 | H02J3/01 |
| Y | * Spalte 5, Zeile 1 - Zeile 57 * * Spalte 6, Zeile 49 - Zeile 67 * * Spalte 8 Zeile 54- Spalte 9 Zeile 10* * Abbildungen 1,2,6,9 * | 6,7 | |
| X | US 5 757 099 A (BHATTACHARYA SUBHASHISH ET AL) 26. Mai 1998 (1998-05-26) | 1-6,8 | |
| Y | * Spalte 16, Zeile 11 - Zeile 49 * * Spalte 18, Zeile 41 - Zeile 53 * * Abbildungen 4,14 * | 7 | |
| A,D | US 5 648 894 A (DEDONCKER RIK WIVINA ANNA ADEL ET AL) 15. Juli 1997 (1997-07-15) | 1-5,8-10 | |
| Y | * Zusammenfassung * * Spalte 2, Zeile 27 - Zeile 31 * | 6,7 | |

**RECHERCHIERTE SACHGEBIETE (Int.Cl.7)**

H02J

Der vorliegende Recherchenbericht wurde für alle Patentansprüche erstellt

| Recherchenort | Abschlußdatum der Recherche | Prüfer |
|---|---|---|
| DEN HAAG | 22. März 2002 | Marannino, E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 11 1267

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2002

| Im Recherchenbericht angeführtes Patentdokument | Datum der Veröffentlichung | Mitglied(er) der Patentfamilie | Datum der Veröffentlichung |
|---|---|---|---|
| US 5567994 A | 22-10-1996 | KEINE | |
| US 5757099 A | 26-05-1998 | KEINE | |
| US 5648894 A | 15-07-1997 | KEINE | |

Für nähere Einzelheiten zu diesem Anhang : siehe Amtsblatt des Europäischen Patentamts, Nr.12/82